Europäisches Patentamt

(19) European Patent Office

Office européen des brevets

(11) Numéro de publication: **0 049 645**
**B1**

(12) **FASCICULE DE BREVET EUROPEEN**

(45) Date de publication du fascicule du brevet: **17.04.85**

(21) Numéro de dépôt: **81401177.1**

(22) Date de dépôt: **23.07.81**

(51) Int. Cl.⁴: **F 16 B 7/00,** F 16 B 17/00,
B 21 D 39/06

(54) Assemblage en T et procédé pour l'obtenir.

(30) Priorité: **06.10.80 FR 8021307**
**30.06.81 FR 8112817**

(43) Date de publication de la demande:
**14.04.82 Bulletin 82/15**

(45) Mention de la délivrance du brevet:
**17.04.85 Bulletin 85/16**

(84) Etats contractants désignés:
**AT BE CH DE FR GB IT LI LU NL SE**

(56) Documents cités:
**BE-A- 466 463**
**FR-A-1 247 439**
**US-A-2 614 827**
**US-A-3 064 707**

(73) Titulaire: **Renaud, Maurice**
**66 Chemin des Bretoux**
**F-95320 Saint Leu la Forêt (FR)**

(72) Inventeur: **Renaud, Maurice**
**66 Chemin des Bretoux**
**F-95320 Saint Leu la Forêt (FR)**

(74) Mandataire: **Dupuy, René Gaston et al**
**Cabinet DUPUY & LOYER 14 rue La Fayette**
**F-75009 Paris (FR)**

Courier Press, Leamington Spa, England.

## Description

La présente invention concerne l'auto-assemblage de tubes permettant de réaliser des modules solides de toutes formes, de haute résistance, sans aucun apport de moyens de fixation autres que le formage du tube. L'ensemble pouvant être démonté ou non à la main sans aucun outillage.

Le principe de cet auto-assemblage repose sur la conjugaison de plusieurs formages plein corps et en bout de tube disposés de façon à obtenir les assemblages souhaités.

Il est déjà connu que les tubes sont assemblés souvent définitivement par soudure FR—A—1247439, brasure, crevés, lumières US—A—2614827, US—A—3 064 707, BE—A—466463, usinages divers etc. Dans la plupart des cas, ces assemblages entraînent un fractionnement du tube ou une interruption partielle de sa section, diminuant considérablement la résistance de ces assemblages. Dans d'autres cas, des métaux d'apport ou des pièces autres que le tube, sont nécessaires, enfin la protection contre l'oxydation intérieure n'est pas toujours réalisée.

L'assemblage selon l'invention consiste en un assemblage en T du type tenon et mortaise de deux tubes métalliques, caractérisé en ce que ladite mortaise est obtenue par déformation locale de la paroi d'un de ces tubes, par enfoncement d'une partie de sa surface latérale en direction de sa surface latérale opposée, sa section étant sans solution de continuité.

Les modules tubulaires selon l'invention permettent de réaliser des assemblages en T de deux tubes métalliques, du type tenon et mortaise dans lesquels ladite mortaise ayant sensiblement pour section la forme de la lettre majuscule grecque oméga obtenue par déformation locale de la paroi du premier tube par enfoncement d'une partie de sa surface latérale en direction de la surface latérale opposée, sa section étant sans aucune solution de continuité, le tenon, légèrement en queue d'aronde, étant lui, obtenu par écrasement de l'extrémité du second tube.

D'autres particularités et avantage de l'invention apparaîtront à la lecture de la description et des revendications qui suivent faites en regard des dessins annexés sur lesquels:

— la figure 1 est une vue explosée d'un assemblage du type tenon et mortaise;
— les figures 2 et 3 sont respectivement une coupe partielle et une vue élévation d'un tel assemblage;
— la figure 4 montre un mode de réalisation sous forme de pince d'un dispositif facilitant la mise en place des éléments de l'assemblage;
— les figures 5 et 6 représentent des variantes;
— la figure 7 montre une structure pouvant constituer un module solide applicable dans de nombreux cas, et en particulier applicable comme armature par surmoulage des matières plastiques en vue d'obtenir une palette de manutention comme visible à la figure 8.

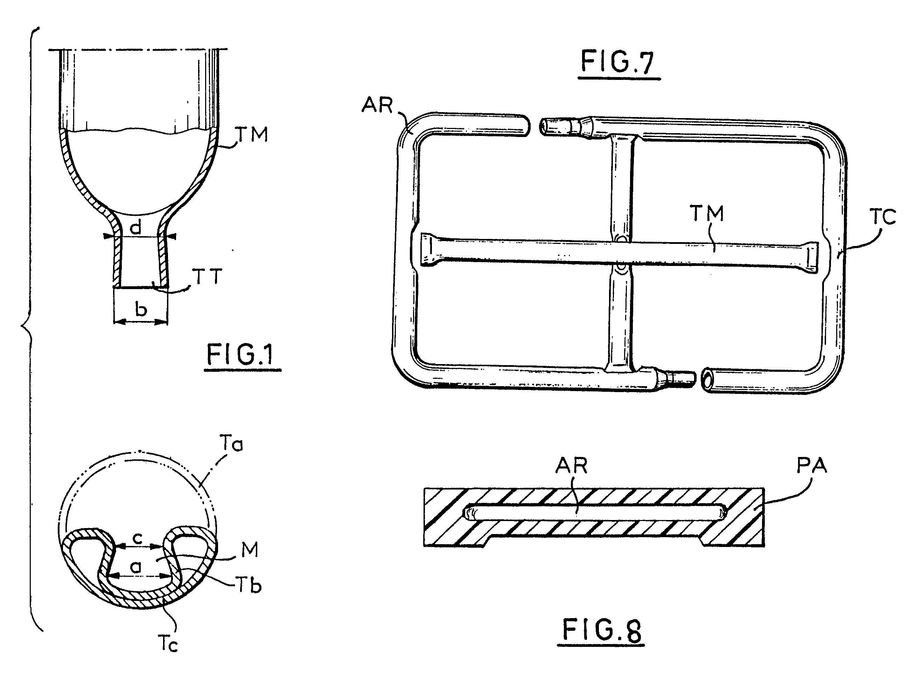

Comme on le voit sur la figure 1, la mortaise M du tube T2 on refoule vers l'intérieur la paroi du tube de manière à ce que sa paroi TA vienne en TB appliquer contre la paroi TC restée non déformée.

Il est avantageux de réaliser cette déformation sous la forme de la lettre majuscule grecque oméga, tel que l'entrée c) soit plus étroite que la partie la plus large a).

Parallèlement, on écrase l'extrémité du tube TM de manière à former un tenon TT plus large en $b$ qu'en $d$. Ce tenon, du fait de cette différence d'épaisseur constitue une sorte de queue d'aronde.

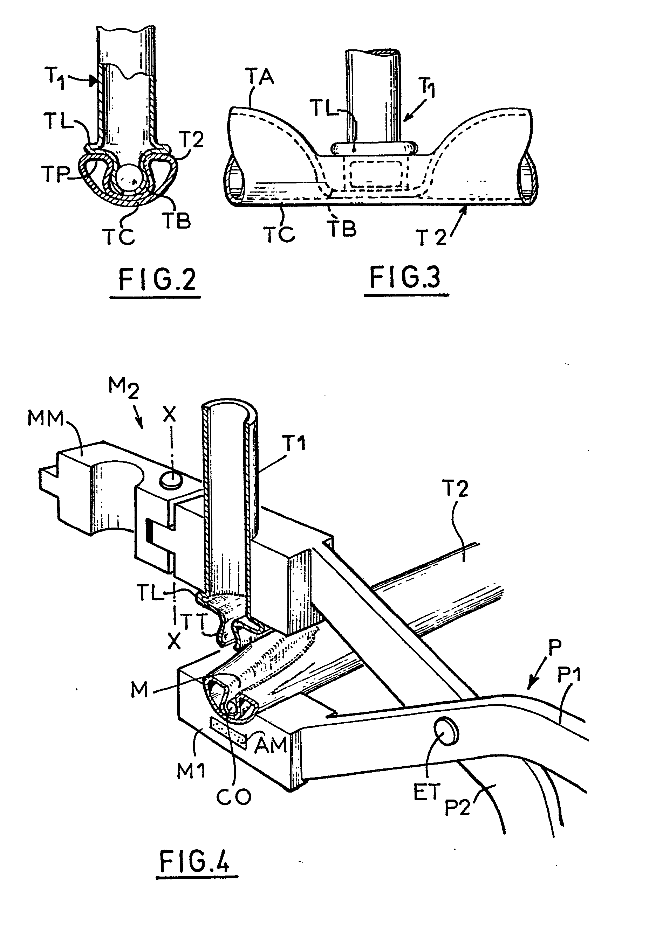

Il est aisé de comprendre que si lorsque l'on force le tenon TT à l'intérieur de la mortaise M en oméga, la partie $b$ écarte l'entrée en c) pour pénétrer à l'intérieur de la partie ventrue $a$. L'élasticité du métal referme l'entrée au moment où celle-ci se trouve en regard de la partie rétrécie $d$ du tenon. Selon l'importance donnée à la dépouille du tenon et la différence des côtés a/c, l'encliquetage peut être rendu plus ou moins facilement démontable. La figure 2 montre une disposition particulière selon laquelle l'encliquetage devient quasi indémontable et l'assemblage alors a une résistance tout aussi grande qu'il pourrait avoir s'il s'agissait de soudure des pièces.

Pour réaliser cet encliquetage indémontable, on pose à l'intérieur de l'oméga, une pièce cylindrique CO, puis on emmanche le tenon TT dans la mortaise M comme précédemment dit, mais au moyen d'un maillet de manière à ce que la billette ou cylindre CO vienne s'encastrer dans l'embouchure $b$ du tenon.

Il est aisé de comprendre que cette pièce cylindrique agit alors à la manière d'un angrois évasant irrémédiablement cette embouchure, rendant ainsi impossible le désassemblage du tenon et de la mortaise.

Comme on le voit aussi sur les figures 2 et 3, pour faciliter l'emmanchement et donner une bonne assise du tube T1 sur le tube T2, on produit sur le tube T1 aux environs de la partie amincie de la queue d'aronde, une saillie par exemple une collerette TL qui a deux fonctions: donner une assise au tube T1 sur la partie TP de T2 et fournir un point d'application d'une force provoquant la pénétration du tenon TT dans la mortaise M.

Il a été en effet remarqué que, notamment pour les tubes T1 de grande longueur, l'emmanchement pour être correct était relativement difficile. Pour le faciliter, l'invention comporte une pince appropriée pour usage précis qu'il en est fait.

Selon le mode de réalisation de la figure 3, cette pince P formée de deux branches P1—P2 articulées selon leur entablure ET, comprend deux mors dissemblables M1 et M2.

Le mors M1 ou sabot comporte une gouttière MG destinée à recevoir la partie inférieure de la surface latérale du tube T2 et un aimant permanent AM tendant à immobiliser le tube T2 si celui-ci est en un métal magnétique.

Avantageusement, ce mors est complété par un volet VO monté pivotant et servant à compléter le maintien du tube T2.

Le mors supérieur M2 est composé d'éléments articulés l'un sur l'autre MF et MM selon un axe vertical X—X. Chaque élément comporte une gouttière semi-cylindrique de diamètre à peine supérieur à celui du tube T1.

Après avoir préformé le tenon TT comme il est dit précédemment, et comme visible sur les figures 1 et 3, on place le tube T1 dans la gouttière MG et l'on rabat VO puis on dispose le tube T1 entre les éléments du mors M2. Il suffit de rapprocher les deux manches de la pince P pour que le mors M2 prennent appui sur la collerette TL, force le tenon TT à écarter les lèvres de la mortaise M, à entrer dans celle-ci, puis à faire entrer la billette CO formant angrois dans l'extrémité du tube T1.

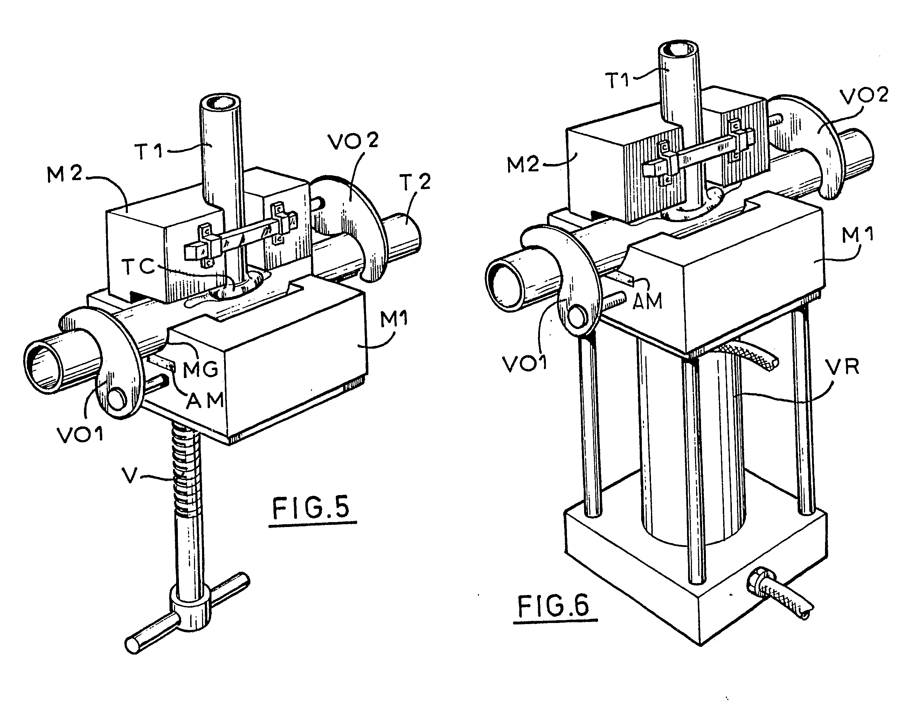

Dans les modes de réalisation des figures 4 et 5 on retrouve les mêmes pièces et/ou des pièces équivalentes seuls les moyens d'actionnement des mors sont différents.

Dans le cas de la figure 4, l'un des mors est solidaire d'une vis V, l'autre forme écrou sur cette vis. Sur chaque mors est monté pivotant un volet échancré au diamètre du tube T2 et venant se rabattre sur lui pendant l'opération d'emmanchage.

Dans le cas de la figure 5, l'un des mors est solidaire du piston d'un vérin VR, l'autre du cylindre de celui-ci.

La figure 7 concrétise un module qui peut avoir des utilisations diverses. Tel qu'il est représente, il pourrait constituer l'armature d'une pièce moulée en matière plastique, par exemple, l'armature AR d'une palette de manutention PA (fig. 8) sans qu'il soit nécessaire de faire un dessin spécial.

Un module selon l'invention pourrait ne comporter que des traverses placées parallèlement les unes aux autres, permettant ainsi de réaliser économiquement des échelles ou des barrières ou clôtures. On peut penser également aux ossatures pour étagères, casiers de stockage ou à des balcons ou échafaudages, charpentes métalliques, mobilier, galerie de voiture.

**Revendications**

1. Assemblage en T du type tenon (TT) et mortaise (M) de deux tubes (T1, T2) métalliques, caractérisé en ce que ladite mortaise est obtenue par déformation locale de la paroi (TA) de l'un de ces tubes, par enfoncement d'une partie de sa surface latérale en direction de sa surface latérale opposée, sa section étant sans solution de continuité.

2. Assemblage selon la revendication 1, caractérisé en ce que l'entrée (c) de la déformation formant mortaise est plus étroite que la partie interne (a) de celle-ci.

3. Assemblage selon la revendication 2, caractérisé en ce que ladite mortaise (M) a sensiblement la forme de la lettre majuscule grecque oméga.

4. Assemblage selon la revendication 3, caractérisé en ce que la paroi intérieure du tube formant le fond de cet oméga est contiguë à la paroi intérieure de la partie du tube non déformée.

5. Assemblage selon l'une des revendications précédentes, caractérisé en ce que le tenon (TT) est obtenu par écrasement à l'extrémité du second tube.

6. Assemblage selon la revendication 5, caractérisé en ce que ce tenon (TT) est légèrement en queue d'aronde.

7. Assemblage selon la revendication 6, caractérisé en ce que la plus grande épaisseur de ce tenon (TT) est au moins égale à la plus grande largeur de ladite mortaise (M), tandis que sa plus petite épaisseur est voisine de la largeur de l'entrée de celle-ci.

8. Assemblage selon l'une des revendications précédentes, caractérisé en ce que ledit tenon (TT) comporte au moins une saillie extérieure (TL) destinée notamment à venir appliquer sur la partie extérieure (TP) de la mortaise (M).

9. Procédé d'assemblage en T de deux tubes selon l'une des revendications précédentes, caractérisé en ce que l'on forme la mortaise (M) selon la revendication 4 et le tenon (TT) selon la revendication 6, que l'on place au fond de la mortaise une billette de section cylindrique (CO), que l'on introduit le tenon (TT) dans la mortaise (M) que l'on force cette introduction pour que la billette (CO) écarte l'extrémité (b) du tube.

10. Procédé d'assemblage selon la revendication 9 applicable aux assemblages utilisant un tube (T1) à saillie (TL), caractérisé en ce qu'on utilise un dispositif à deux mors pouvant être rapprochés l'un de l'autre, l'un de ceux-ci étant placé sous le tube comportant la mortaise, l'autre prenant appui sur la saillie extérieure (TL) du tube (T1) conformé en tenon (TT).

11. Dispositif pour la mise en oeuvre du procédé selon la revendication 10, comportant deux mors (M1, M2) et des moyens susceptibles de les rapprocher l'un de l'autre, caractérisé en ce que l'un de ces mors (M2) est une fourche et le second (M1) un sabot, ledit sabot comportant une gouttière (MG) pour recevoir le tube mortaisé.

12. Dispositif selon la revendication 11, caractérisé en ce que le sabot comporte aussi un aimant permanent.

13. Dispositif selon l'une des revendications 11 ou 12, caractérisé en ce que sur au moins un des mors est articulés un volet (VO) de maintien du tube mortaisé.

14. Dispositif selon l'une des revendications 11 à 13, caractérisé en ce que les deux mors sont solidaires des branches articulées d'une pince.

15. Dispositif selon l'une des revendications 11 à 13, caractérisé en ce que l'un des mors est solidaire d'une vis et l'autre d'un écrou se déplaçant sur cette vis (V).

16. Dispositif selon l'une des revendications 11 à 13, caractérisé en ce que l'un des mors est solidaire du piston d'un vérin (VR) et l'autre du cylindre de celui-ci.

## Patentansprüche

1. T-Verbindung zweier Metallrohre (TA, T2) mit Zapfen (TT) und Zapfenloch (M), dadurch gekennzeichnet, dass das genannte Zapfenloch durch örtliche Verformung der Wandung eines dieser Rohre, durch Eindrücken eines Teiles seiner seitlichen Oberfläche in Richtung auf seine gegenüberliegende seitliche Oberfläche erzielt wird, wobei sein Querschnitt keine Unterbrechung der Kontinuität aufweist.

2. Verbindung nach Anspruch 1, dadurch gekennzeichent, dass der Eintritt (c) der das Zapfenloch bildenden Verformung enger ist als der innere Teil (a) desselben.

3. Verbindung nach Anspruch 2, dadurch gekennzeichnet, dass das genannte Zapfenloch (M) merklich die Form des griechischen Grossbuchstabens Omega aufweist.

4. Verbindung nach Anspruch 3, dadurch gekennzeichnet, dass die Innenwand des Rohres, welche den Boden dieses Omegas bildet, an die Innenwand des nicht verformten Rohrteils angrenzt.

5. Verbindung nach einem der vorstehenden Ansprüche 1 bis 4, dadurch gekennzeichnet, dass der Zapfen (TT) durch Stauchung des Endes des zweiten Rohres erzielt wird.

6. Verbindung nach Anspruch 5, dadurch gekennzeichnet, dass der Zapfen (TT) leicht schwalbenschwanzförmig ausgebildet ist.

7. Verbindung nach Anspruch 6, dadurch gekennzeichnet, dass die grösste Dicke dieses Zapfens (TT) wenigstens der grössten Breite des genannten Zapfenloches (M) entspricht, während seine kleinste Dicke annähernd der Breite des Zapfenlocheintritts angepasst ist.

8. Verbindung nach einem der vorstehenden Ansprüche 1 bis 7, dadurch gekennzeichnet, dass der genannte Zapfen (TT) wenigstens einen äusseren Vorsprung (TL) aufweist, der insbesondere zur Auflage an dem äusseren Teil (TP) des Zapfenloches (M) bestimmt ist.

9. Verfahren zur T-Verbindung zweier Rohre nach einem der vorstehenden Ansprüche 1 bis 8, dadurch gekennzeichnet, dass das Zapfenloch (M) gemäss Anspruch 4 und der Zapfen (TT) gemäss Anspruch 6 ausgebildet wird, dass ein Knüppel (CO) mit zylindrischem Querschnitt auf dem Boden des Zapfenlochs eingesetzt wird, das der Zapfen (TT) in das Zapfenloch (M) eingeführt wird und diese Einführung erzwungen wird, damit der Knüppel (CO) das Endstück (b) des Rohres aufweitet.

10. Verbindungsverfahren nach Anspruch 9, anwendbar auf Verbindungen bei denen ein Rohr (T1) mit Vorsprung (TL) verwendet wird, dadurch gekennzeichnet, dass eine Vorrichtung mit zwei Spannbacken zum Einsatz kommt, die einander angenähert werden können, wobei die eine unter dem das Zapfenloch aufweisenden Rohr ange-

bracht ist, während sich die andere auf dem äusseren Vorsprung (TL) des als Zapfen (TT) ausgebildeten Rohres (T1) abstützt.

11. Vorrichtung zur Verwirklichung des Verfahrens nach Anspruch 10 mit zwei Spannbacken (M1, M2) und Organen zur gegenseitigen Annäherung derselben, dadurch gekennzeichnet, dass eine dieser Spannbacken (M2) als Gabel und die zweite (M1) als Schuh ausgebildet sind, wobei der Schuh eine Rinne (MG) zur Aufnahme des mit dem Zapfenloch versehenen Rohres umfasst.

12. Vorrichtung nach Anspruch 11, dadurch gekennzeichnet, dass der Schuh ebenfalls einen Dauermagneten umfasst.

13. Vorrichtung nach einem der Ansprüche 11 oder 12, dadurch gekennzeichnet, dass auf wenigstens einer der Spannbacken eine Klappe (VO) zur Sicherung des mit dem Zapfenloch versehenen Rohres angelenkt ist.

14. Vorrichtung nach einem der Ansprüche 11 bis 13, dadurch gekennzeichnet, dass die beiden Spannbacken fest mit den Gelenkarmen einer Zange verbunden sind.

15. Vorrichtung nach einem der Ansprüche 11 bis 13, dadurch gekennzeichnet, dass die eine der Spannbacken fest mit einer Schraube und die andere fest mit einer sich auf dieser Schraube (V) verschiebenden Mutter verbunden sind.

16. Vorrichtung nach einem der Ansprüche 11 bis 13 dadurch gekennzeichnet, dass die eine der spannbacken fest mit dem Kolben eines Hubzylinders (VR) und die anderen fest mit dem Zylinder desselben verbunden sind.

## Claims

1. T-assembly of the tenon (TT) and mortise (M) type for interconnecting two metal tubes (TA, T2) the mortise formed in one tube being obtained through a local distortion of the wall (TA) of said one tube, and by depressing one portion of its lateral surface towards the opposite lateral surface, without breaking the continuity of the cross section of this one tube.

2. Assembly as claimed in Claim 1, wherein the inlet portion (C) of the mortise forming distorsion is narrower than the inner portion (a) thereof.

3. Assembly as claimed in Claim 2, wherein said mortise (M) is substantially omega shaped in cross section.

4. Assembly as claimed in Claim 3, wherein the inner wall of the omega portion of the tube is closely adjacent to the undistorted inner wall of the tube.

5. Assembly as claimed in preceding claims, wherein the tenon (TT) is obtained by crushing the end portion of the other tube.

6. Assembly as claimed in Claim 5, wherein said tenon (TT) has a slightly dovetail configuration.

7. Assembly as claimed in Claim 6, wherein the major thickness of said tenon (TT) is at least equal to the major width of said mortise (M), and the minor thickness of said tenon is substantially equal to the width of the inlet portion of said mortise.

8. Assembly as claimed in preceding claims, wherein said tenon (TT) comprises at least one collar-like external projection (TL) adapted notably to bear on the outer portion of said mortise (M).

9. A method of assembling two tubes to form a T-assembly as claimed in any of the preceding claims, wherein said mortise (M) is formed as set forth in Claim 4 and said tenon (TT) as set forth in Claim 6, a wedge-forming cylindrical member (CO) is inserted into the bottom of said mortise and subsequently introducing the tenon (TT) into the mortise (M) with a force sufficient to cause said cylindrical member (CO) to divaricate the inlet lips (b) of said tenon.

10. A method as claimed in Claim 9, applicable to T-assemblies comprising a tube (T1) with a collar-like external projection (TL) by using device comprising a pair of jaws adapted to be moved towards each other, one jaw being disposed under the mortise tube and the other bearing against said collar-like projection (TL) of the tenon (TT).

11. A device for carrying out the method set forth in Claim 10, which comprises a pair of jaws (M1, M2) and means adapted to move said jaws towards each other, wherein one jaw (M2) is substantially fork-shaped and the other (M1) constitutes an anvil, said anvil comprising a groove (MG) adapted to receive said mortise tube.

12. A device as claimed in Claim 11, wherein said anvil comprises a permanent magnet.

13. A device as claimed in any of Claims 11 or 12, wherein at least one of said jaws has pivotally mounted thereon a hook-shaped disc (VO) for holding said mortise tube in position.

14. A device as claimed in any of Claims 11 to 13, wherein said pair of jaws are each rigid with one arm of a pair of pliers.

15. A device as claimed in any of Claims 11 to 13, wherein one of said jaws is axially rigid with a screw and the other jaw is rigid with a nut engaged on said screw (V).

16. A device as claimed in any of Claims 11 to 13, wherein one of said jaws is rigid with the piston of a fluid-operated cylinder (VR), the other jaw being rigid with the cylinder body.

FIG.7

FIG.1

FIG.8

0 049 645

FIG.2

FIG.3

FIG.4

FIG.5

FIG.6

0 049 645